# EUROPÄISCHE PATENTSCHRIFT

(11) **EP 2 714 277 B1**
(45) Veröffentlichungstag und Bekanntmachung des Hinweises auf die Patenterteilung: **25.09.2019**
(21) Anmeldenummer: 12726072.7
(22) Anmeldetag: 29.05.2012
(51) Int. Cl.: B02C 18/14, B02C 18/18, B02C 18/22, B26D 1/38, B29B 9/06

(54) **VERFAHREN ZUM ZERKLEINERN EINES ELASTOMERS SOWIE ZERKLEINERER**
METHOD FOR DISINTEGRATING AN ELASTOMER AND DISINTEGRATOR
PROCÉDÉ DE FRAGMENTATION D'UN ÉLASTOMÈRE ET DISPOSITIF DE FRAGMENTATION

(30) Priorität: 30.05.2011 EP 11168067
(43) Veröffentlichungstag der Anmeldung: 09.04.2014
(73) Patentinhaber: ARLANXEO Deutschland GmbH, 41540 Dormagen (DE)
(72) Erfinder: REIF, Lothar, 41541 Dormagen (DE); NEUNER, Thomas, 40721 Hilden (DE); MÄHNER-WOLFARTH, Christian, 52080 Aachen (DE); OBRECHT, Werner, 47447 Moers (DE)
(74) Vertreter: Michalski Hüttermann & Partner Patentanwälte mbB
(86) Internationale Anmeldenummer: PCT/EP2012/060021
(87) Internationale Veröffentlichungsnummer: WO 2012/163904

(56) Entgegenhaltungen:
- DE-A1- 2 050 863
- DE-A1- 2 340 614
- DE-A1- 2 538 174
- DE-U1- 20 217 065
- FR-A- 1 048 230
- US-A- 2 812 815
- US-A- 2 978 942
- US-A- 3 244 049

## Beschreibung

Die vorliegende Erfindung betrifft ein Verfahren zum Zerkleinern eines Elastomers sowie einen Zerkleinerer zum Zerkleinern eines Elastomers, mit deren Hilfe ein elastomerer Gegenstand, insbesondere ein aus Chloropren-Kautschuk hergestellter Elastomerstrang, in möglichst dünne Scheiben zerteilt werden kann, damit das zerkleinerte Elastomer eine möglichst große Oberfläche aufweist, wenn es beispielsweise in einem Lösungsmittel aufgelöst werden soll, um beispielsweise einen Klebstoff herzustellen.

Es ist bekannt, ein Elastomer mit Hilfe eines Zerkleinerers zu zerkleinern, bei dem mit Hilfe einer Vorschubeinrichtung das Elastomer über einen Boden auf ein Schneidwerkzeug in Form eines Umfangfräsers zu bewegt wird, so dass das Schneidwerkzeug mit Hilfe eines Schneidkeils einzelne Scheiben von dem Elastomer abtrennen kann. Nachteilig bei einem derartigen Zerkleinerer und einem derartigen Verfahren zum Zerkleinern eines Elastomers ist, dass sich das Elastomer bei einem Kontakt des Schneidkeils mit dem Elastomer verformen kann, wodurch das Elastomer der Scheidkante des Schneidkeils ausweichen kann. Dies führt dazu, dass eine bestimmte Mindestdicke für die abgetrennten Scheiben vorgesehen werden muss, damit ein planvolles Zerkleinern des Elastomers überhaupt zu erreichen ist. Bei einem verdrillten Elastomerstrang ergibt sich daher eine Mindestdicke von ca. 1,8 bis 2,2 mm.

Aus DE 2 050 863 A1 ist es bekannt einen Elastomerstrang mit Hilfe einer Schneidvorrichtung zu zerhacken, bei der ein rotierendes Messer mit seiner Rückseite auf den Elastomerstrang auftrifft und bei einer Weiterbewegung einen Teil des Elastomerstrangs abschält.

Aus US 2,978,942 A1 ist es bekannt aus einem weichen Material hergestellte Platten zu zerkleinern, indem ein rotierendes Messer mit seiner Schneidkante an der Oberseite eines Teils der Platten auftrifft, der über einen Boden horizontal hinausragt.

Es besteht ein ständiges Bedürfnis Elastomere ohne großen Aufwand in möglichst kleine und insbesondere dünne Stücke zu zerteilen, damit beispielsweise für nachfolgende Prozesse eine möglichst große spezifische Oberfläche, das heißt Außenfläche pro Gewichtseinheit, erreicht werden kann. Durch die große spezifische Oberfläche kann das Elastomer in einem Lösungsmittel schneller aufgelöst werden, um insbesondere einen Elastomer-basierten Klebstoff herzustellen.

Es ist die Aufgabe der Erfindung, ein Verfahren zum Zerkleinern eines Elastomers sowie einen Zerkleinerer zum Zerkleinern eines Elastomers zu schaffen, mit deren Hilfe für das zerkleinerte Elastomer die spezifische Oberfläche vergrößert und insbesondere die Schichtdicke abgetrennter Späne und/oder Scheiben verkleinert werden kann.

Die Lösung der Aufgabe erfolgt erfindungsgemäß durch ein Verfahren zum Zerkleinern eines Elastomers mit den Merkmalen des Anspruchs 1 sowie einen Zerkleinerer zum Zerkleinern eines Elastomers mit den Merkmalen des Anspruchs 13.

Bei dem erfindungsgemäßen Verfahren zum Zerkleinern eines Elastomers, insbesondere mindestens eines Elastomerstrangs, wird das Elastomer über einen Boden relativ zu einem Schneidwerkzeug auf das Schneidwerkzeug zu bewegt, wobei das Schneidwerkzeug einen Schneidkeil mit einer Schneidkante und einer sich an die Schneidkante anschließende Spanfläche aufweist. Erfindungsgemäß wird das Elastomer, nachdem der Schneidkeil in Kontakt mit dem Elastomer gelangt, zunächst nur von der Spanfläche zwischen Spanfläche und Boden zumindest teilweise komprimiert, bevor die Schneidkante durch das Elastomer mittels Keilschneiden schneidet, wobei das Elastomer in einem vom Boden elastisch hoch gewipptem Zustand an der flachen Rückseite des Schneidkeils von der Spanfläche eingefangen, danach gegen den Boden gedrückt und in einer Position, in welcher das Elastomer im Wesentlichen nicht mehr elastisch ausweichen kann, durch ein Abrollen der Schneidkante auf dem teilweise komprimierten Elastomer und ein keilartig durch das Elastomer Hindurchbewegen des Schneidkeils geschnitten wird, wobei bei der Bewegung des Schneidkeils an dem Boden vorbei eine durch die Schneidkante geführte Winkelhalbierende um einen Winkel α von 45° ≤ α ≤ 90° gegenüber der Oberfläche des Bodens angeschrägt ist.

Die Bewegung des Schneidkeils des Schneidwerkzeugs erfolgt relativ zu dem Elastomer in einer Art und Weise, dass ein linienförmiger Kontakt der Schneidkante mit dem Elastomer zunächst vermieden wird und statt dessen ein flächiger Kontakt mit der Spanfläche mit dem Elastomer erfolgt. Durch den flächigen Kontakt der Spanfläche mit dem Elastomer wird die auf das Elastomer wirkende Kraft des Schneidkeils zunächst über die größere Spanfläche verteilt, so dass zunächst im Vergleich zu einem linienförmigen Kontakt über die Schneidkante eine geringe Kraft pro Fläche auf das Elastomer wirkt. Ein spontanes Ausweichen des Elastomers wird dadurch vermieden. Gleichzeitig wird bei der Weiterbewegung des Schneidkeils die Kraft pro Fläche allmählich erhöht, wobei jedoch im Vergleich zu einer über die Schneidkante linienförmig aufgebrachten Kraft aufgrund der größeren Fläche eine höhere Reibungskraft zwischen dem Schneidkeil und dem Elastomer erreicht wird. Aufgrund der höheren Reibung wird vermieden, dass unter der ansteigenden Belastung das Elastomer sich von dem Schneidkeil flexibel durch Dehnungseffekte wegbewegen kann. Erst zu einem späteren Zeitpunkt, wenn das Elastomer von der Spanfläche zwischen Spanfläche und Boden hinreichend komprimiert wurde, kann der Schneidkeil auf dem Elastomer derart abrollen, dass im Wesentlichen nur noch die Schneidkante des Schneidkeils in Kontakt mit dem Elastomer steht, wodurch aufgrund der hohen Scherkräfte an der Schneidkante ein Teil des Elastomers von dem Schneidkeil abgetrennt werden kann. Das Abtrennen des Elastomers kann dabei nach einem anfänglichen Halten durch Komprimieren und/oder Klemmen des Elastomers zwischen der Spanfläche und dem Boden mittels Keilschneiden oder Messerschneiden, insbesondere durch einschneidiges Keilschneiden auf einem Amboss, erfolgen, wobei die einseitige Keilschneide durch die Schneidkante des Schneidkeils und der Amboss durch den Boden ausgebildet sein kann. Der Eleastomerstrang kann dadurch in einem vom Boden elastisch hoch gewipptem Zustand an der flachen Rückseite des Schneidkeils von der Spanfläche eingefangen, danach gegen den Boden gedrückt und in einer Position, in welcher der Elastomerstrang im Wesentlichen nicht mehr elastisch ausweichen kann, durch ein Abrollen der Schneidkante auf dem teilweise komprimierten Elastomerstrang und ein keilartig durch den Elastomerstrang Hindurchbewegen des Schneidkeils geschnitten werden. Die Schneidkante des Schneidkeils kann an dem als Amboss wirkenden Boden vorbeibewegt werden, wobei ein minimaler Abstand s des Schneidkeils zum Boden insbesondere 10 µm ≤ s ≤ 2 mm, vorzugsweise 50 µm ≤ s ≤ 1 mm, weiter bevorzugt 150 µm ≤ s ≤ 700 µm und besonders bevorzugt 300 µm ≤ s ≤ 500 µm beträgt. Bei der Bewegung des Schneidkeils an dem Boden vorbei, weist insbesondere die Schneidkante nicht im Wesentlichen parallel zur Oberfläche des Bodens sondern ist zur Oberfläche des Bodens angeschrägt, so dass die durch die Schneidkante geführte Winkelhalbierende vorzugsweise um einen Winkel α von 45° ≤ α ≤ 60° und weiter bevorzugt 45° ≤ α ≤ 55° gegenüber der Oberfläche des Bodens angeschrägt ist. Das Abtrennen des Elastomers, beispielsweise durch einschneidiges Keilschneiden, erfolgt dabei mittels einer Schneide und damit gegenschneidenfrei, wodurch die Wartungskosten für eine zweite Schneide vermieden werden können. Dadurch, dass durch den flächigem Kontakt über die Spanfläche beim Komprimieren des Elastomers ein Ausweichen des Elastomers vermieden werden kann, ist es möglich, bei dem von dem Elastomer abgetrennten Stücken besonders geringe Schichtdicken zu erreichen, wodurch sich für das zerkleinerte Elastomer eine besonders große spezifische Oberfläche, das heißt Außenfläche pro Gewichtseinheit, ergibt. Das Verfahren ist insbesondere zum Zerkleinern eines Latex-Strangs aus Butyl-Kautschuk beziehungsweise Chloropren-Kautschuk geeignet, um beispielsweise einen Latex-basierten Klebstoff herstellen zu können. Ferner ist es möglich mehr als einen Elastomerstrang gleichzeitig zu zerkleinern, indem beispielsweise zwei oder mehr Elastomerstränge nebeneinander dem selben Schneidkeil des Schneidwerkzeugs zugeführt werden. Die Zerkleinerungsleistung kann bei einem Einzug von zwei und mehr Elastomersträngen entsprechend erhöht werden.

Vorzugweise sind die Bewegungen des Elastomers und die Bewegung des Schneidkeils derart aufeinander angepasst, dass von dem Elastomer abgetrennte Scheiben eine Dicke t von t ≤ 1,5 mm, insbesondere t ≤ 1,2 mm, vorzugsweise t ≤ 1,0 mm und besonders bevorzugt t ≤ 0,8 mm aufweisen. Aufgrund der besonders schmalen Dicken der vom Elastomer abgetrennten Stücke ergibt sich eine entsprechend große spezifische Oberfläche für die vom Elastomer abgetrennten Stücke. Die abgetrennten Scheiben weisen insbesondere eine minimale Dicke t von t ≥ 0,2 mm, vorzugsweise t ≥ 0,4 mm und besonders bevorzugt t ≥ 0,6 mm auf, um die Handhabung der vom Elastomer abgetrennten Scheiben als Schüttgut zu erleichtern.

In einer bevorzugten Ausführungsform weist das Elastomer ein zum Schneidwerkzeug weisendes Schnittende auf, wobei dem Schnittende des Elastomers durch das Schneiden des Schneidwerkzeugs eine Schwingung zwischen einem dem Boden zugeordneten unteren Totpunkt und einen vom Boden wegweisenden oberen Totpunkt aufgeprägt wird, und der Schneidkeil das Elastomer im Wesentlichen dann kontaktiert, wenn sich das Schnittende im Wesentlichen im oberen Totpunkt befindet. Die Schwingung des Schnittendes des Elastomers, insbesondere die Amplitude der Schwingung, kann von dem Abstand des Schnittendes des Elastomers zu der nächstliegenden Klemmung oder Fixierung des Elastomers, beispielsweise einer Förderrolle, abhängig sein. Dadurch kann durch die Anordnung und/oder Ausgestaltung der Rolle zur Förderung des Elastomers die Schwingung des Schnittendes, insbesondere die Amplitude, beeinflussbar sein, wobei beispielsweise eine unmittelbar an dem Schneidwerkzeug und/oder dem Schnittende angeordnete Rolle eine geringere Amplitude des Schnittendes bewirken kann als eine weiter von dem Schneidwerkzeug und/oder dem Schnittende entfernte Rolle. Der Abstand der Rolle zu dem Schnittende und/oder Schneidwerkzeug ist dabei im Wesentlichen abhängig von dem Durchmesser der Rolle. Insbesondere findet der Kontakt des Schneidkeils mit dem Elastomer, bezogen auf den oberen Totpunkt des Schnittendes mit einer Phasenverschiebung ϕ von ϕ ≤ ±15°, insbesondere ϕ ≤ ±8° und besonders bevorzugt ϕ ≤ ±2° statt. Dadurch, dass die Spanfläche des Schneidkeils das Elastomer im Wesentlichen im oberen Totpunkt der aufgeprägten Auf- und Abschwingung kontaktiert, werden von der Spanfläche auf das Elastomer zunächst nur geringe Kräfte ausgeübt, die ein Ausweichen des Elastomers vermeiden. Eine Komprimierung des Elastomers findet, sofern überhaupt, nur in einem vergleichsweise geringfügigen Ausmaß statt. Sobald das Elastomer im unteren Totpunkt in Kontakt mit dem Boden gelangt, wird durch den Boden ein beispielsweise als Amboss wirkendes Widerlager gebildet, gegen das das Elastomer von dem Schneidkeil gedrückt werden kann, um das Elastomer zu komprimieren. Die Komprimierung des Elastomers sowie das Schneiden des Elastomers kann dann in einem besonders kurzen Zeitraum erfolgen, so dass selbst bei einem kontinuierlich zugeführten Elastomer im Wesentlichen keine Blockierungen und/oder Longitudinalschwingungen auftreten. Da der eigentliche Schnitt nur in einem besonders kurzen Zeitintervall stattfindet, ergibt sich ein gerader gleichmäßiger Schnitt. Dies ermöglicht es, die von dem Elastomer abgetrennten Scheiben über einen längeren Zeitraum mit einer gleichmäßigen beständigen Qualität herzustellen. Dies erleichtert es geforderte Produktqualitäten bezüglich der spezifischen Oberfläche der vom Elastomer abgetrennten Stücke kostengünstig einzuhalten.

Vorzugsweise beträgt ein Winkel α zwischen der Spanfläche und dem Boden zum Zeitpunkt des Beginns des Kontakts des Schneidkeils und dem Elastomer 15° ≤ α ≤ 40°, insbesondere 20° ≤ α ≤ 35° und bevorzugt 25° ≤ α ≤ 30°. Bei einem derartigen Winkel α ergibt sich beim ersten Kontakt der Spanfläche mit dem Elastomer eine im Wesentlichen parallele Ausrichtung der Spanfläche zur kontaktierten Oberfläche des Elastomers. Hierbei wird insbesondere berücksichtigt, dass das Elastomer nach einem vorherigen Schneidvorgang von dem Boden aufgrund der eigenen Elastizität hochfedert. Wenn das Schneidwerkzeug rotatorisch betrieben wird, kann der Mittelpunkt der rotatorischen Bewegung besonders einfach derart gewählt werden, dass durch eine Abrollbewegung des Schneidkeils auf dem Elastomer die Schneidkante genau zum beabsichtigen Beginn des eigentlichen Schneidprozesses im im Wesentlichen alleinigen Kontakt mit dem Elastomer ist.

Vorzugsweise setzt das Schneiden des Elastomers mit Hilfe der Schneidkante bei einem Druck p unterhalb eines Druckes pₖ für den Beginn von Dehnungskristallisationen des Elastomers ein, wobei insbesondere 0,20 ≤ p/pₖ ≤ 0,95, vorzugsweise 0,50 ≤ p/pₖ ≤ 0,90, weiter bevorzugt 0,6 ≤ p/pₖ ≤ 0,85 und besonders bevorzugt 0,7 ≤ p/pₖ ≤ 0,80 gilt. Dadurch wird eine Dehnungskristallisation des Elastomers, welche die Produkteigenschaften der abgetrennten Stücke verändern könnte, sicher vermieden. Gleichzeitig ist es möglich, das Elastomer mit Hilfe der starren Spanfläche bis zu einem Druck kurz unterhalb der Dehnungskristallisation zu komprimieren, der eine besonders hohe Reibungskraft ermöglicht und auch bei besonders geringen Schichtdicken eine elastische Ausweichbewegung des Elastomers verhindert. Dies ermöglicht beim eigentlichen Schneidprozess mit Hilfe der Schneidkante des Schneidkeils ein sauberes Abtrennen besonders schmaler Scheiben von dem Elastomer.

Besonders bevorzugt gelangt die Spanfläche des Schneidkeils auf einer Umfangsfläche des Elastomers in Kontakt mit dem Elastomer. Ein Kontakt des Schneidkeils mit einer zum Schneidwerkzeug weisenden Stirnseite des Elastomers wird dadurch vermieden. Dadurch wird sichergestellt, dass die vom Elastomer abgetrennten Späne im Wesentlichen scheibenförmige Stücke mit einer konstanten Schichtdicke sind und keine unregelmäßig abgetrennten Ecken.

Insbesondere weisen die Schneidkanten von zwei nachfolgenden Schneidkeilen einen Abstand D auf, wobei der Abstand D, bezogen auf einen effektiven Durchmesser d des Elastomers 1,0 ≤ D/d ≤ 8,0, insbesondere 1,5 ≤ D/d ≤ 6,0, vorzugsweise 2,0 ≤ D/d ≤ 4,0 und besonders bevorzugt D/d = 3,0 ± 0,5 beträgt. Dadurch wird sichergestellt, dass mit einer moderaten Vorschubgeschwindigkeit für das Elastomer relativ zum Schneidwerkzeug genügend Material des Elastomers zwischen die Schneidkanten von zwei nachfolgenden Schneidkeilen gelangt, um einen sauberen Schnitt zu ermöglichen. Gleichzeitig ist es möglich, zwischen zwei nachfolgenden Schneidkeilen einen genügend großen Raum bereitzustellen, das vom Elastomer abgetrennte Stück von dem Elastomer weg transportieren zu können. Die Vorschubgeschwindigkeit des Elastomers kann dabei mit der Drehzahl beispielsweise eines rotierenden Schneidwerkzeuges in Abhängigkeit der Materialeigenschaften, insbesondere der Elastizität, des Elastomers synchronisierbar sein.

Insbesondere weist die Schneidkante des Schneidkeils eine Umfangsgeschwindigkeit v von 1,0 m/s≤ v ≤ 50,0m/s, insbesondere 10,0 m/s≤ v ≤ 35,0 m/s, vorzugsweise 20,0 m/s ≤ v ≤ 30,0 m/s und besonders bevorzugt 25,0 m/s ≤ v ≤ 27 m/s auf. Die Umfangsgeschwindigkeit entspricht im Wesentlichen der Schnittgeschwindigkeit beim Trennen eines Stücks von dem Elastomer und ist derart gewählt, dass unter der Berücksichtigung der Elastizität des Elastomers ein Schneiden des Elastomers ohne wesentliche Probleme erfolgen kann. Aufgrund der Elastizität des Elastomers weist das Elastomer gemessen nach DIN 53518 eine Rückverformung von insbesondere ≤ 30%, vorzugsweise ≤ 25%, weiter bevorzugt ≤ 20% und besonders bevorzugt ≤ 15% auf.

Besonders bevorzugt rotiert das Schneidwerkzeug um einen Mittelpunkt, wobei der Mittelpunkt zu einer Mittellinie des Elastomers im Wesentlichen senkrecht zur Bewegungsrichtung des Elastomers um eine Strecke s versetzt ist, wobei insbesondere die Strecke s bezogen auf den effektiven Durchmesser d des Elastomers 0,4 ≤ s/d ≤ 1,0 vorzugsweise 0,45 ≤ s/d ≤ 0,6 und besonders bevorzugt 0,5 ≤ s/d ≤ 0,55 beträgt. Dadurch, dass der Mittelpunkt des rotierenden Schneidwerkzeugs außermittig zum Elastomer, insbesondere eines gewundenen Elastomerstrangs aus Chloropren-Kautschuk, angeordnet ist, ist es einfacher zu realisieren, dass das Schneidkeil zunächst nur mit seiner Spanfläche und erst später mit einer Schneidkante eine Kraft auf das Elastomer ausübt. Das Schneidwerkzeug ist insbesondere um die Strecke s entgegen der Schwerkraftrichtung versetzt. Dadurch wird in Schwerkraftrichtung unterhalb des Schneidwerkzeugs zusätzlicher Raum geschaffen, um die vom Elastomer abgetrennten Stücke vom Elastomer wegtransportieren zu können.

Vorzugsweise ist die Spanfläche um einen Winkel β zu einem durch die Schneidkante verlaufenden Radius des Schneidwerkzeugs in Umfangsrichtung geneigt, wobei insbesondere 20° ≤ β ≤ 40°, vorzugsweise 25° ≤ β ≤ 35° und besonders bevorzugt β = 30° ± 2,5° gilt. Durch die Neigung der Spanfläche lässt sich eine geeignete Abrollbewegung des Schneidkeils auf dem Elastomer einstellen.

Besonders bevorzugt wird vor dem Schneiden ein Elastomerfilm, insbesondere Chloropren-Kautschuk, zu einem Strang verdrillt. Durch die Verdrillung des Elastomerfilms ergibt sich für den sich daraus ergebenden Strang eine hinreichend hohe Festigkeit, um einzelne Stücke von dem Strang abschneiden zu können.

Die Erfindung betrifft ferner einen Zerkleinerer zum Zerkleinern eines Elastomers, insbesondere eines Elastomerstrangs, der insbesondere zur Durchführung des vorstehend beschriebenen Verfahrens geeignet ist. Der Zerkleinerer weist ein Schneidwerkzeug zum Abtrennen von Scheiben von dem Elastomer auf, wobei das Schneidwerk einen Schneidkeil mit einer Schneidkante und einer sich an die Schneidkante anschließende Spanfläche aufweist und bei der Bewegung des Schneidkeils an dem Boden vorbei eine durch die Schneidkante geführte Winkelhalbierende um einen Winkel α von 45° ≤ α ≤ 90° gegenüber der Oberfläche des Bodens angeschrägt ist.. Der Zerkleinerer weist ferner eine Vorschubeinrichtung zum Bewegen des Elastomers über einen Boden auf das Schneidwerk zu auf. Erfindungsgemäß sind der Vorschub der Vorschubeinrichtung und die Geometrie des Schneidwerkzeugs derart aufeinander abgestimmt, dass das Elastomer, nachdem der Schneidkeil in Kontakt mit dem Elastomer gelangt, zunächst nur von der Spanfläche zwischen Spanfläche und Boden zumindest teilweise komprimiert wird, bevor die Schneidkante durch das Elastomer mittels Keilschneiden schneidet, wobei das Elastomer in einem vom Boden elastisch hoch gewipptem Zustand an der flachen Rückseite des Schneidkeils von der Spanfläche eingefangen, danach gegen den Boden gedrückt und in einer Position, in welcher das Elastomer im Wesentlichen nicht mehr elastisch ausweichen kann, durch ein Abrollen der Schneidkante auf dem teilweise komprimierten Elastomer und ein keilartig durch das Elastomer Hindurchbewegen des Schneidkeils geschnitten wird. Der Boden kann in Form einer einseitigen festen Lagerung, beispielsweise in Form einer Gleitplatte, zum Zuführen des Elastomers ausgebildet sein. Der Boden kann beispielsweise bei einem einschneidigen Keilschneiden des Elastomers durch die Schneidkante des Schneidkeils als Amboss ausgebildet sein. Dadurch, dass das Elastomer zunächst über die im Vergleich zur Schneidkante flächige Spanfläche komprimiert wird, wird eine elastische Ausweichbewegung des Elastomers vermieden, so dass besonders dünne Scheiben von dem Elastomer abgeschnitten werden können und sich für die vom Elastomer abgeschnittenen Stücke eine besonders große spezifische Oberfläche ergibt. Insbesondere lassen sich mit Hilfe des Zerkleinerers die anhand des vorstehend beschriebenen Verfahrens erreichbaren Vorteile realisieren. Der Zerkleinerer kann insbesondere, wie vorstehend anhand des Verfahrens beschrieben aus- und weitergebildet sein. Der Zerkleinerer ist insbesondere zum Zerkleinern eines Latex-Strangs aus Butyl-Kautschuk beziehungsweise Chloropren-Kautschuk geeignet, um beispielsweise einen Latex-basierten Klebstoff herstellen zu können.

Insbesondere ist die Position des Schneidwerkzeugs relativ zum Boden mit Hilfe von mindestens einer Justiereinrichtung einstellbar. Mit Hilfe der Justiereinrichtung lässt sich insbesondere die Position des Schneidwerkzeugs in vertikaler Richtung und/oder horizontaler Richtung einstellen, wodurch es möglich ist, in Abhängigkeit von der Elastizität und des effektiven Durchmessers des Elastomers die Komprimier- und Schneidbewegung des Schneidkeils anzupassen. Die Justiereinrichtung kann beispielsweise ein mit dem Boden und/oder mit dem Schneidwerkzeug verbundenes Befestigungsblech mit mindestens einem Langloch aufweisen, so dass der Boden und/oder das Schneidwerkzeug entsprechend der Ausgestaltung des Langlochs mit Hilfe von Schrauben an verschiedenen Positionen fixiert werden kann.

Besonders bevorzugt ist das Schneidwerkzeug rotierbar gelagert und insbesondere mit auswechselbaren Schneidkeilen versehen. Die Schneidkeile können beispielsweise als Wechselplatten ausgestaltet sein, die schnell ausgetauscht werden können und mit dem Schneidwerkzeug lösbar verbunden werden können. Die Schneidkeile können insbesondere mit dem Schneidwerkzeug austauschbar verschraubt sein.

Die Erfindung betrifft ferner eine aus Chloropren-Kautschuk herstellbare Elastomerscheibe, die eine Dicke t von t ≤ 1,5 mm, insbesondere t ≤ 1,2 mm, vorzugsweise t ≤ 1,0 mm und besonders bevorzugt t ≤ 0,8 mm aufweist. Aufgrund der besonders schmalen Dicke t ergibt sich eine entsprechend große spezifische Oberfläche für die Elastomerscheibe, welche beispielsweise ein Auflösen der Elastomerscheibe in einem Lösungsmittel, insbesondere zur Herstellung eines Klebstoffs, erleichtert und beschleunigen kann. Die Elastomerscheibe weist insbesondere eine minimale Dicke t von t ≥ 0,2 mm, vorzugsweise t ≥ 0,4 mm und besonders bevorzugt t ≥ 0,6 mm auf, um die Handhabung der Elastomerscheibe als Schüttgut zu erleichtern. Die Elastomerscheibe ist vorzugsweise durch das vorstehend beschriebene Verfahren herstellbar. Insbesondere ist die Elastomerscheibe mit Hilfe des vorstehend beschriebenen Zerkleinerers herstellbar. Die Elastomerscheibe kann insbesondere wie vorstehend anhand des Verfahrens und des Zerkleinerers erläutert aus- und weitergebildet sein. Insbesondere weist die aus einem verdrillten Strang aus Chloropren-Kautschuk herstellbare Elastomerscheibe eine Dichte p von ρ = 1,23 g/cm³ ± 0,02 g/cm³ auf.

Die Elastomerscheibe ist insbesondere als im Wesentlichen kreiszylindrische Scheibe ausgeformt, wobei die Elastormerscheibe insbesondere einen Durchmesse d von 1,0 cm ≤ d ≤ 10,0 cm, vorzugsweise 2,0 cm ≤ d ≤ 7,0 cm, weiter bevorzugt 2,5 cm ≤ d ≤ 4,0 cm und besonders bevorzugt d = 3,0 cm ± 0,3 cm aufweist.

Vorzugsweise weist die Elastomerscheibe bei einer Dicke t = 1,0 mm eine massenbezogene spezifische Oberfläche Sₘ von Sₘ = 1,73 m²/kg ± 0,2 m²/kg auf. Bei einer Dicke t = 2,0 mm kann eine entsprechende Elastomerscheibe eine massenbezogene spezifische Oberfläche Sₘ von Sₘ = 0,92 m²/kg aufweisen. Bei einer Dicke t = 4,0 mm kann eine entsprechende Elastomerscheibe eine massenbezogene spezifische Oberfläche Sₘ von Sₘ = 0,51 m²/kg aufweisen, während eine entsprechende Elastomerscheibe mit einer Dicke von t = 8,0 mm lediglich eine massenbezogene spezifische Oberfläche Sₘ von Sₘ = 0,31 m²/kg aufweisen würde. Im Vergleich zu einer Elastomerscheibe mit einer Dicke von t = 4,0 mm ist die massenbezogene spezifische Oberfläche Sₘ der erfindungsgemäßen Elastomerscheibe bei einer Dicke von t = 1,0 mm immerhin ca. 3,4-fach größer und im Vergleich zu einer Elastomerscheibe mit einer Dicke von t = 8,0 mm ist die massenbezogene spezifische Oberfläche Sₘ der erfindungsgemäßen Elastomerscheibe bei einer Dicke von t = 1,0 mm sogar ca. 5,5-fach größer. Die massenbezogene spezifische Oberfläche Sₘ wird insbesondere gemäß DIN ISO 9277:2003-05 Bestimmung der spezifischen Oberfläche von Feststoffen durch Gasadsorption nach dem BET-Verfahren (ISO 9277:1995) bestimmt.

Nachfolgend wird die Erfindung unter Bezugnahme auf die anliegenden Zeichnungen anhand eines bevorzugten Ausführungsbeispiels näher erläutert.

Es zeigen:
- Fig. 1:: eine schematische Schnittansicht eines Zerkleinerers;
- Fig. 2:: eine schematische Detailansicht des Zerkleinerers aus Fig. 1 in einer ersten Position;
- Fig. 3:: eine schematische Detailansicht des Zerkleinerers aus Fig. 1 in einer zweiten Position;
- Fig. 4:: eine schematische Detailansicht des Zerkleinerers aus Fig. 1 in einer dritten Position;
- Fig. 5:: eine schematische Detailansicht des Zerkleinerers aus Fig. 1 in einer vierten Position;
- Fig. 6:: eine schematische Detailansicht des Zerkleinerers aus Fig. 1 in einer fünften Position; und
- Fig. 7:: eine schematische Detailansicht des Zerkleinerers aus Fig. 1 in einer sechsten Position.

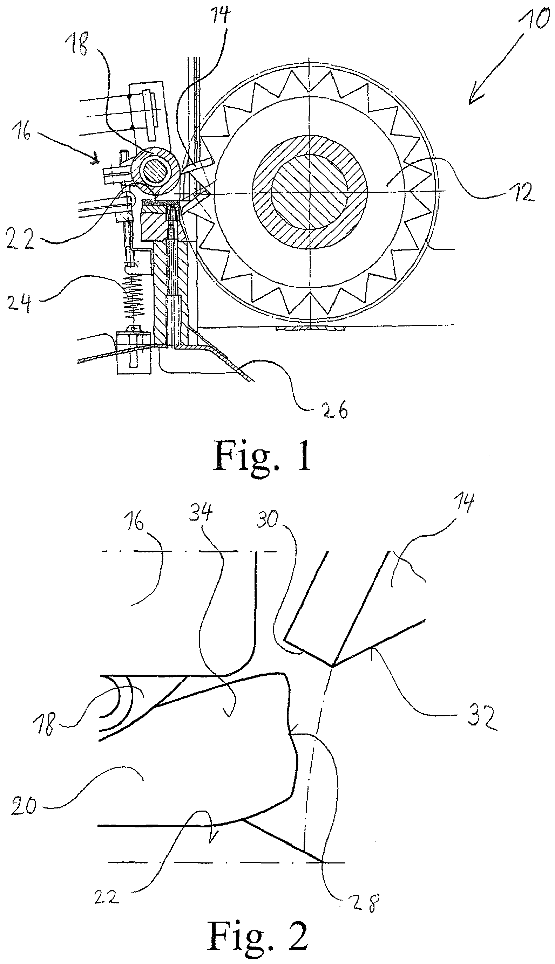

Der in Fig. 1 teilweise dargestellte Zerkleinerer 10 weist ein rotierendes Schneidwerkzeug 12 auf, an dessen Umfang mehrere Schneidkeile 14 in Form von Wechselplatten angebracht sind. Mit Hilfe einer Vorschubeinrichtung 16 kann über ein Vorschubelement in Form einer angetriebenen Rolle 18 ein nicht dargestelltes Elastomer 20 über einen Boden 22 auf das Schneidwerkzeug 12 zu bewegt werden. Die Rolle 18 kann insbesondere nach radial außen abstehende Zähne aufweisen, die sich etwas in das zu zerkleinernde Elastomer eindrücken können, damit das Elastomer beim Zerkleinern nicht unbeabsichtigt rückwärts zurück rutscht. Der Boden 22 kann mit Hilfe von Verschraubungen 24 in der Höhe verstellt werden. Die vom Elastomer 20 abgetrennten Stücke können über eine Rampe 26, beispielsweise zu einem nicht dargestellten Auffangbehälter geleitet werden.

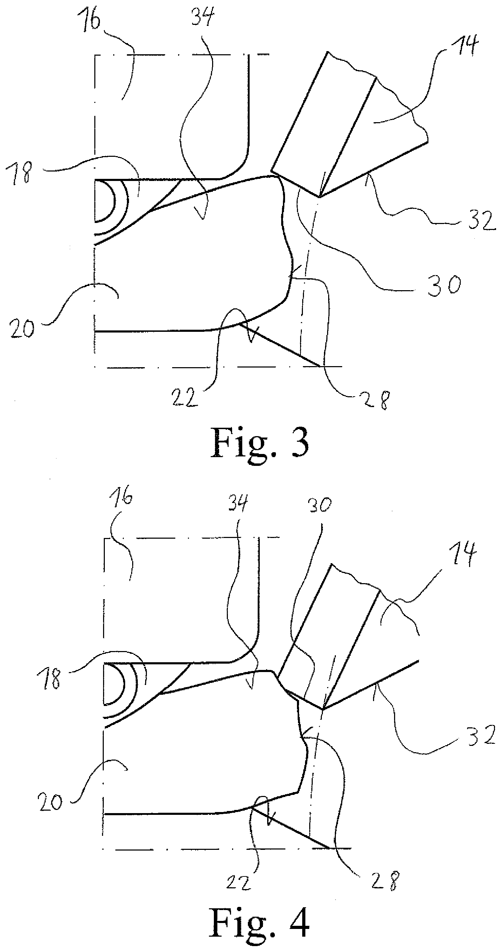

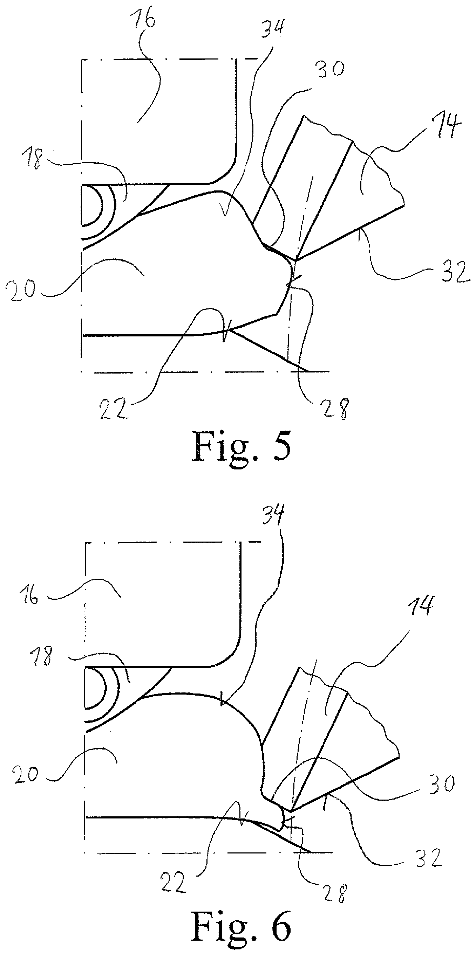

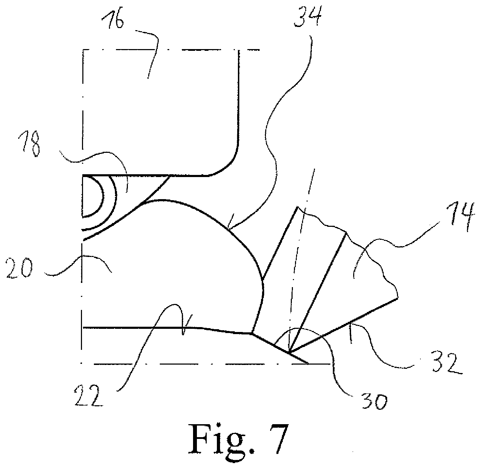

Wie in Fig. 2 dargestellt, befindet sich ein zum Schneidwerkzeug 12 weisendes Schnittende 28 des Elastomers 20 zu Beginn des Schneidvorgangs in einem oberen Totpunkt, der sich im Wesentlichen maximal weit entfernt von dem Boden 22 befindet. Eine sich an einer Schneidkante 30 anschließende Spanfläche 32 des Schneidkeils 20 ist im Wesentlichen parallel zu einer Umfangsfläche 34 des Elastomers 20 im oberen Bereich des Schnittendes 28. Wie in Fig. 3 dargestellt, trifft die Spanfläche 32 im Wesentlichen flächig auf die sich im oberen Totpunkt befindende Umfangsfläche 34 des Elastomers 20. Wie in Fig. 4 dargestellt, wird das Elastomer 20 von der Spanfläche 32 des Schneidkeils 40 nach unten auf den Boden 20 zu gedrückt. Wie in Fig. 5 dargestellt, kann dabei das Elastomer 20 bereits komprimiert werden. Wie in Fig. 6 dargestellt, kann in dem Moment, wenn das komprimierte Elastomer 20 am Boden 22 ankommt, im Wesentlichen nur die Schneidkante 30 in Kontakt mit dem Elastomer 20 sein. Wie in Fig. 7 dargestellt, erfolgt danach der eigentliche Schnitt, durch den ein scheibenförmiges Stück von dem Elastomer 20 abgeschnitten wird. Da das Elastomer von der Vorschubeinrichtung 16 kontinuierlich nachgeführt wird, kann das Elastomer in der in Fig. 7 dargestellten Situation mit seiner Umfangsfläche bereits mit etwas Kraft gegen den Schneidkeil 14 drücken und nach dem Abtrennen des scheibenförmiges Stücks nach oben federn bis das Schnittende 28 wieder im oberen Totpunkt angekommen ist. Anschließend kann der nächste Schneidkeil 14 den in den Fig. 2 bis 7 dargestellten Schneidprozess wiederholen.

## Patentansprüche

1. Verfahren zum Zerkleinern eines Elastomers (20), insbesondere mindestens eines Elastomerstrangs, bei dem
das Elastomer (20) über einen Boden (22) relativ zu einem Schneidwerkzeug (12) auf das Schneidwerkzeug (12) zu bewegt wird,
wobei das Schneidwerkzeug (12) einen Schneidkeil (14) mit einer Schneidkante (30) und einer sich an die Schneidkante (30) anschließende Spanfläche (32) aufweist,
**dadurch gekennzeichnet, dass**
das Elastomer (20), nachdem der Schneidkeil (14) in Kontakt mit dem Elastomer (20) gelangt, zunächst nur von der Spanfläche (32) zwischen Spanfläche (32) und Boden (22) zumindest teilweise komprimiert wird, bevor die Schneidkante (30) durch das Elastomer (20) mittels Keilschneiden schneidet,
wobei das Elastomer (20) in einem vom Boden (22) elastisch hoch gewipptem Zustand an der flachen Rückseite des Schneidkeils (14) von der Spanfläche (32) eingefangen, danach gegen den Boden (22) gedrückt und in einer Position, in welcher das Elastomer (20) im Wesentlichen nicht mehr elastisch ausweichen kann, durch ein Abrollen der Schneidkante (30) auf dem teilweise komprimierten Elastomer (20) und ein keilartig durch das Elastomer Hindurchbewegen des Schneidkeils (14) geschnitten wird,
wobei bei der Bewegung des Schneidkeils (14) an dem Boden (22) vorbei eine durch die Schneidkante (30) geführte Winkelhalbierende um einen Winkel α von 45° ≤ α ≤ 90° gegenüber der Oberfläche des Bodens (22) angeschrägt ist.

2. Verfahren nach Anspruch 1, **dadurch gekennzeichnet, dass** die Schneidkante (30) durch das Elastomer (20) mittels einschneidiges Keilschneiden auf einem Amboss, schneidet, wobei die einseitige Keilschneide durch die Schneidkante (30) des Schneidkeils und der Amboss durch den Boden (22) ausgebildet ist.

3. Verfahren nach Anspruch 1 oder 2, **dadurch gekennzeichnet, dass** die Bewegung des Elastomers (20) und die Bewegung des Schneidkeils (14) derart aufeinander angepasst sind, dass vom Elastomer (20) abgetrennte Scheiben eine Dicke t von t ≤ 1,5mm, insbesondere t ≤ 1,2mm, vorzugsweise t ≤ 1,0mm und besonders bevorzugt t ≤ 0,8mm aufweisen.

4. Verfahren nach einem der Ansprüche 1 bis 3 **dadurch gekennzeichnet, dass** das Elastomer (20) ein zum Schneidwerkzeug (12) weisendes Schnittende (28) aufweist, wobei dem Schnittende (28) des Elastomers (20) durch das Schneiden des Schneidwerkzeugs (12) eine Schwingung zwischen einem dem Boden (22) zugeordneten unteren Totpunkt und einem vom Boden (22) wegweisenden oberen Totpunkt aufgeprägt wird und der Schneidkeil (14) das Elastomer (20) im Wesentlichen dann kontaktiert, wenn sich das Schnittende (28) im Wesentlichen im oberen Totpunkt befindet, wobei insbesondere der Kontakt des Schneidkeils (14) mit dem Elastomer (20) bezogen auf den oberen Totpunkt des Schnittendes (28) mit einer Phasenverschiebung ϕ von ϕ ≤ ±15°, insbesondere ϕ ≤ ±8° und besonders bevorzugt ϕ ≤ ±2° stattfindet.

5. Verfahren nach einem der Ansprüche 1 bis 4, **dadurch gekennzeichnet, dass** ein Winkel α zwischen der Spanfläche (32) und dem Boden (22) zum Zeitpunkt des Beginns des Kontakts des Schneidkeils (14) mit dem Elastomer (20) 15° ≤ α ≤ 40°, insbesondere 20° ≤ α ≤ 35° und bevorzugt 25° ≤ α ≤ 30° beträgt.

6. Verfahren nach einem der Ansprüche 1 bis 5, **dadurch gekennzeichnet, dass** das Schneiden des Elastomers (20) mit Hilfe der Schneidkante (32) bei einem Druck p unterhalb eines Druckes pₖ für den Beginn von Dehnungskristallisation des Elastomers (20) einsetzt, wobei insbesondere 0,20 ≤ p/pₖ ≤ 0,95, vorzugsweise 0,50 ≤ p/pₖ ≤ 0,90, weiter bevorzugt 0,6 ≤ p/pₖ ≤ 0,85 und besonders bevorzugt 0,7 ≤ p/pₖ ≤ 0,80 gilt.

7. Verfahren nach einem der Ansprüche 1 bis 6, **dadurch gekennzeichnet, dass** die Spanfläche (32) des Schneidkeils (14) auf einer Umfangsfläche (34) des Elastomers (20) in Kontakt mit dem Elastomer (20) gelangt.

8. Verfahren nach einem der Ansprüche 1 bis 7, **dadurch gekennzeichnet, dass** die Schneidkanten (30) von zwei nachfolgenden Schneidkeilen (14) einen Abstand D aufweisen, wobei der Abstand D bezogen auf den effektiven Durchmesser d des Elastomers (20) 1,0 ≤ D/d ≤ 8,0, insbesondere 1,5 ≤ D/d ≤ 6,0, vorzugsweise 2,0 ≤ D/d ≤ 4,0 und besonders bevorzugt D/d = 3,0 ± 0,5 beträgt.

9. Verfahren nach einem der Ansprüche 1 bis 8, **dadurch gekennzeichnet, dass** die Schneidkante (30) des Schneidkeils (14) eine Umfangsgeschwindigkeit v von 1,0 m/s ≤ v ≤ 50,0m/s, insbesondere 10,0 m/s ≤ v ≤ 35,0 m/s, vorzugsweise 20,0 m/s ≤ v ≤ 30,0 m/s und besonders bevorzugt 25,0 m/s ≤ v ≤ 27 m/s aufweist.

10. Verfahren nach einem der Ansprüche 1 bis 9, **dadurch gekennzeichnet, dass** das Schneidwerkzeug (12) um einen Mittelpunkt rotiert, wobei der Mittelpunkt zu einer Mittellinie des Elastomers (20) im Wesentlich senkrecht zur Bewegungsrichtung des Elastomers (20) um eine Strecke s versetzt ist, wobei insbesondere die Strecke s bezogen auf den effektiven Durchmessers des Elastomers (20) d 0,4 ≤ s/d ≤ 1,0 vorzugsweise 0,45 ≤ s/d ≤ 0,6 und besonders bevorzugt 0,5 ≤ s/d ≤ 0,55 beträgt.

11. Verfahren nach einem der Ansprüche 1 bis 10, **dadurch gekennzeichnet, dass** die Spanfläche (32) um einen Winkel β zu einen durch die Schneidkante (30) verlaufenden Radius des Schneidwerkzeugs (12) in Umfangsrichtung geneigt ist, wobei insbesondere 20° ≤ β ≤ 40°, vorzugsweise 25° ≤ β ≤ 35° und besonders bevorzugt β = 30°±2,5° gilt.

12. Verfahren nach einem der Ansprüche 1 bis 11, **dadurch gekennzeichnet, dass** vor dem Schneiden ein Elastomerfilm, insbesondere Chloropren-Kautschuk, zu einem Strang verdrillt wird.

13. Zerkleinerer zum Zerkleinern eines Elastomers (20), insbesondere eines ElastomerStrangs, insbesondere zur Durchführung des Verfahrens nach einem der Ansprüche 1 bis 12, mit
einem Schneidwerkzeug (12) zum Abtrennen von Scheiben von dem Elastomer (20) und
einer Vorschubeinrichtung (16) zum Bewegen des Elastomers (20) über einen Boden (22) auf das Schneidwerkzeug (12) zu,
wobei das Schneidwerkzeug (12) einen Schneidkeil (14) mit einer Schneidkante (30) und einer sich an die Schneidkante (30) anschließende Spanfläche (32) aufweist, **dadurch gekennzeichnet, dass**
bei der Bewegung des Schneidkeils (14) an dem Boden (22) vorbei eine durch die Schneidkante (30) geführte Winkelhalbierende um einen Winkel α von 45° ≤ α ≤ 90° gegenüber der Oberfläche des Bodens (22) angeschrägt ist und
der Vorschub der Vorschubeinrichtung (16) und die Geometrie des Schneidwerkzeugs (12) derart aufeinander abgestimmt sind, dass das Elastomer (20), nachdem der Schneidkeil (14) in Kontakt mit dem Elastomer (20) gelangt, zunächst nur von der Spanfläche (32) zwischen Spanfläche (32) und Boden (22) zumindest teilweise komprimiert wird, bevor die Schneidkante (30) durch das Elastomer (20) mittels Keilschneiden schneidet, wobei das Elastomer (20) in einem vom Boden (22) elastisch hoch gewipptem Zustand an der flachen Rückseite des Schneidkeils (14) von der Spanfläche (32) eingefangen, danach gegen den Boden (22) gedrückt und in einer Position, in welcher das Elastomer (20) im Wesentlichen nicht mehr elastisch ausweichen kann, durch ein Abrollen der Schneidkante (30) auf dem teilweise komprimierten Elastomer (20) und ein keilartig durch das Elastomer Hindurchbewegen des Schneidkeils (14) geschnitten wird.

## Claims

1. Method for disintegrating an elastomer (20), in particular at least one elastomer strand, in which
the elastomer (20) is moved in relation to a cutting tool (12) over a base (22) toward the cutting tool (12),
the cutting tool (12) having a cutting wedge (14) with a cutting edge (30) and a rake face (32) adjoining the cutting edge (30),
**characterized in that**
once the cutting wedge (14) comes into contact with the elastomer (20), the elastomer (20) is initially at least partially compressed only by the rake face (32) between the rake face (32) and the base (22), before the cutting edge (30) cuts through the elastomer (20) by means of wedge cutting,
in a state in which it has elastically flipped up high from the base (22), the elastomer (20) being captured by the rake face (32) on the flat rear side of the cutting wedge (14), then being pressed against the base (22) and, in a position in which the elastomer (20) can substantially no longer elastically evade it, being cut by rolling of the cutting edge (30) on the partially compressed elastomer (20) and moving of the cutting wedge (14) through the elastomer in a wedge-like manner,
during the movement of the cutting wedge (14) past the base (22), an angle bisector taken through the cutting edge (30) being angled with respect to the surface of the base (22) by an angle α of 45° ≤ α ≤ 90° .

2. Method according to Claim 1, **characterized in that** the cutting edge (30) cuts through the elastomer (20) by single-edged wedge cutting on an anvil, the single-side wedge cutting edge being formed by the cutting edge (30) of the cutting wedge and the anvil being formed by the base (22).

3. Method according to Claim 1 or 2, **characterized in that** the movement of the elastomer (20) and the movement of the cutting wedge (14) are adapted to one another in such a way that slices that are cut off from the elastomer (20) have a thickness t of t ≤ 1.5 mm, in particular t ≤ 1.2 mm, preferably t ≤ 1.0 mm and particularly preferably t ≤ 0.8 mm.

4. Method according to one of Claims 1 to 3, **characterized in that** the elastomer (20) has a cut end (28) facing the cutting tool (12), an oscillation between a bottom dead centre, assigned to the base (22), and a top dead center, remote from the base (22), being imparted to the cut end (28) of the elastomer (20) by the cutting of the cutting tool (12), and the cutting wedge (14) contacting the elastomer (20) substantially whenever the cut end (28) is substantially at the top dead center, the contact of the cutting wedge (14) with the elastomer (20) in particular taking place with respect to the top dead center of the cut end (28) with a phase shift ϕ of ϕ ≤ ±15°, in particular ϕ ≤ ±8° and particularly preferably ϕ ≤ ±2°.

5. Method according to one of Claims 1 to 4, **characterized in that** an angle α between the rake face (32) and the base (22) at the point in time of the beginning of the contact of the cutting wedge (14) and the elastomer (20) is 15° ≤ α ≤ 40°, in particular 20° ≤ α ≤ 35° and preferably 25° ≤ α ≤ 30°.

6. Method according to one of Claims 1 to 5, **characterized in that** the cutting of the elastomer (20) with the aid of the cutting edge (32) commences at a pressure p below a pressure pₖ for the beginning of strain crystallization of the elastomer (20), where in particular 0.20 ≤ p/pₖ ≤ 0.95, preferably 0.50 ≤ p/pₖ ≤ 0.90, more preferably 0.6 ≤ p/pₖ ≤ 0.85 and particularly preferably 0.7 ≤ p/pₖ ≤ 0.80.

7. Method according to one of Claims 1 to 6, **characterized in that** the rake face (32) of the cutting wedge (14) comes into contact with the elastomer (20) on a peripheral surface (34) of the elastomer (20).

8. Method according to one of Claims 1 to 7, **characterized in that** the cutting edges (30) of two successive cutting wedges (14) are at a distance D, where, with respect to the effective diameter d of the elastomer (20), the distance D is 1.0 ≤ D/d ≤ 8.0, in particular 1.5 ≤ D/d ≤ 6.0, preferably 2.0 ≤ D/d ≤ 4.0 and particularly preferably D/d = 3.0 ± 0.5.

9. Method according to one of Claims 1 to 8, **characterized in that** the cutting edge (30) of the cutting wedge (14) has a circumferential speed v of 1.0 m/s ≤ v ≤ 50.0 m/s, in particular 10.0 m/s ≤ v ≤ 35.0 m/s, preferably 20.0 m/s ≤ v ≤ 30.0 m/s and particularly preferably 25.0 m/s ≤ v ≤ 27.0 m/s.

10. Method according to one of Claims 1 to 9, **characterized in that** the cutting tool (12) rotates about a center point, the center point being offset in relation to a center line of the elastomer (20) substantially perpendicularly to the direction of movement of the elastomer (20) by a distance s, where in particular the distance s with respect to the effective diameter d of the elastomer (20) is 0.4 ≤ s/d ≤ 1.0, preferably 0.45 ≤ s/d ≤ 0.6 and particularly preferably 0.5 ≤ s/d ≤ 0.55.

11. Method according to one of Claims 1 to 10, **characterized in that** the rake face (32) is inclined in the circumferential direction by an angle β in relation to a radius of the cutting tool (12) running through the cutting edge (30), where in particular 20° ≤ β ≤ 40°, preferably 25° ≤ β ≤ 35° and particularly preferably β = 30° ± 2.5°.

12. Method according to one of Claims 1 to 11, **characterized in that** an elastomer film, in particular chloroprene rubber, is twisted into a strand before the cutting.

13. Disintegrator for disintegrating an elastomer (20), in particular an elastomer strand, in particular for carrying out the method according to one of Claims 1 to 12, having
a cutting tool (12) for cutting off slices from the elastomer (20) and
an advancing device (16) for moving the elastomer (20) over a base (22) toward the cutting tool (12),
the cutting tool (12) having a cutting wedge (14) with a cutting edge (30) and a rake face (32) adjoining the cutting edge (30),
**characterized in that**, during the movement of the cutting wedge (14) past the base (22), an angle bisector taken through the cutting edge (30) is angled with respect to the surface of the base (22) by an angle α of 45° ≤ α ≤ 90° and
the advancement of the advancing device (16) and the geometry of the cutting tool (12) are made to match one another in such a way that, once the cutting wedge (14) comes into contact with the elastomer (20), the elastomer (20) is intially at least partially compressed only by the rake face (32) between the rake face (32) and the base (22), before the cutting edge (30) cuts through the elastomer (20) by means of wedge cutting,
in a state in which it has elastically flipped up high from the base (22), the elastomer (20) being captured by the rake face (32) on the flat rear side of the cutting wedge (14), then being pressed against the base (22) and, in a position in which the elastomer (20) can substantially no longer elastically evade it, being cut by rolling of the cutting edge (30) on the partially compressed elastomer (20) and moving of the cutting wedge (14) through the elastomer in a wedge-like manner.

## Revendications

1. Procédé permettant de broyer un élastomère (20), en particulier au moins un cordon élastomère, procédé dans lequel
l'élastomère (20) est déplacé par rapport à un outil de coupe (12) vers l'outil de coupe (12) au-dessus d'une base (22),
l'outil de coupe (12) comprenant un coin taillant (14) doté d'une arête de coupe (30) et d'une face de coupe (32) se raccordant à l'arête de coupe (30),
**caractérisé en ce**
**qu'**une fois que le coin taillant (14) est venu en contact avec l'élastomère (20), l'élastomère (20) est tout d'abord seulement au moins partiellement comprimé entre la face de coupe (32) et la base (22) par la face de coupe (32) avant que l'arête de coupe (30) ne coupe à travers l'élastomère (20) par coupe par coin,
l'élastomère (20) étant, dans un état basculé élastiquement vers le haut à partir de la base (22), capturé par la face de coupe (32) au niveau du côté arrière plat du coin taillant (14) et étant ensuite pressé contre la base (22) et étant, dans une position dans laquelle l'élastomère (20) ne peut sensiblement plus s'échapper élastiquement, coupé par un roulement de l'arête de coupe (30) sur l'élastomère (20) partiellement comprimé et par un déplacement du coin taillant (14) à travers l'élastomère à la manière d'un coin,
et, lors du déplacement du coin taillant (14) devant la base (22), une bissectrice passant par l'arête de coupe (30) étant inclinée par rapport à la surface de la base (22) d'un angle α tel que 45° ≤ α ≤ 90°.

2. Procédé selon la revendication 1, **caractérisé en ce que** l'arête de coupe (30) coupe à travers l'élastomère (20) par coupe par coin à une arête sur une enclume, la coupe par coin unilatérale étant formée par l'arête de coupe (30) du coin taillant et l'enclume étant formée par la base (22).

3. Procédé selon la revendication 1 ou 2, **caractérisé en ce que** le déplacement de l'élastomère (20) et le déplacement du coin taillant (14) sont adaptés l'un à l'autre de telle sorte que des tranches séparées de l'élastomère (20) présentent une épaisseur t telle que t ≤ 1,5mm, en particulier t ≤ 1,2mm, de préférence t ≤ 1,0mm et de manière particulièrement préférée t ≤ 0,8mm.

4. Procédé selon l'une des revendications 1 à 3, **caractérisé en ce que** l'élastomère (20) comprend une extrémité de coupe (28) tournée vers l'outil de coupe (12), une oscillation entre un point mort bas associé à la base (22) et un point mort haut éloigné de la base (22) étant communiquée à l'extrémité de coupe (28) de l'élastomère (20) par la coupe de l'outil de coupe (12), et le coin taillant (14) venant sensiblement en contact avec l'élastomère (20) lorsque l'extrémité de coupe (28) se trouve sensiblement au point mort haut, en particulier le contact du coin taillant (14) avec l'élastomère (20) ayant lieu, par rapport point mort haut de l'extrémité de coupe (28), suivant un déphasage ϕ tel que ϕ ≤ ±15°, en particulier ϕ ≤ ±8° et de manière particulièrement préférée ϕ ≤ ±2°.

5. Procédé selon l'une des revendications 1 à 4, **caractérisé en ce qu'**un angle α entre la face de coupe (32) et la base (22) à l'instant du commencement du contact du coin taillant (14) avec l'élastomère (20) est tel que 15° ≤ α ≤ 40°, en particulier 20° ≤ α ≤ 35° et de préférence 25° ≤ α ≤ 30°.

6. Procédé selon l'une des revendications 1 à 5, **caractérisé en ce que** la coupe de l'élastomère (20) à l'aide de l'arête de coupe (32) commence à une pression p inférieure à une pression pₖ pour le commencement de la cristallisation sous étirement de l'élastomère (20), et l'on a en particulier 0,20 ≤ p/pₖ ≤ 0,95, de préférence 0,50 ≤ p/pₖ ≤ 0,90, de manière plus préférée 0,6 ≤ p/pₖ ≤ 0,85 et de manière particulièrement préférée 0,7 ≤ p/pₖ ≤ 0,80.

7. Procédé selon l'une des revendications 1 à 6, **caractérisé en ce que** la face de coupe (32) du coin taillant (14) vient en contact avec l'élastomère (20) sur une surface périphérique (34) de l'élastomère (20).

8. Procédé selon l'une des revendications 1 à 7, **caractérisé en ce que** les arêtes de coupe (30) de deux coins taillants (14) successifs sont séparées d'une distance D, la distance D étant, par rapport au diamètre effectif d de l'élastomère (20), telle que 1,0 ≤ D/d ≤ 8,0, en particulier 1,5 ≤ D/d ≤ 6,0, de préférence 2,0 ≤ D/d ≤ 4,0 et de manière particulièrement préférée D/d = 3,0 ± 0,5.

9. Procédé selon l'une des revendications 1 à 8, **caractérisé en ce que** l'arête de coupe (30) du coin taillant (14) présente une vitesse circonférentielle v telle que 1,0 m/s ≤ v ≤ 50,0 m/s, en particulier 10,0 m/s ≤ v ≤ 35,0 m/s, de préférence 20,0 m/s ≤ v ≤ 30,0 m/s et de manière particulièrement préférée 25,0 m/s ≤ v ≤ 27 m/s.

10. Procédé selon l'une des revendications 1 à 9, **caractérisé en ce que** l'outil de coupe (12) tourne autour d'un centre, le centre étant, par rapport à une ligne médiane de l'élastomère (20), décalé sensiblement perpendiculairement à la direction de déplacement de l'élastomère (20) d'une distance s, la distance s étant en particulier, par rapport au diamètre effectif d de l'élastomère (20), telle que 0,4 ≤ s/d ≤ 1,0 de préférence 0,45 ≤ s/d ≤ 0,6 et de manière particulièrement préférée 0,5 ≤ s/d ≤ 0,55.

11. Procédé selon l'une des revendications 1 à 10, **caractérisé en ce que** la face de coupe (32) est inclinée d'un angle β dans la direction périphérique par rapport à un rayon de l'outil de coupe (12) passant par l'arête de coupe (30), et l'on a en particulier 20° ≤ β ≤ 40°, de préférence 25° ≤ β ≤ 35° et de manière particulièrement préférée β = 30° ± 2,5°.

12. Procédé selon l'une des revendications 1 à 11, **caractérisé en ce qu'**avant la coupe, un film élastomère, en particulier du caoutchouc chloroprène, est torsadé en un cordon.

13. Broyeur permettant de broyer un élastomère (20), en particulier un cordon élastomère, en particulier permettant de mettre en oeuvre le procédé selon l'une des revendications 1 à 12, comprenant
un outil de coupe (12) servant à séparer des tranches de l'élastomère (20) et
un dispositif d'avance (16) servant à déplacer l'élastomère (20) vers l'outil de coupe (12) au-dessus d'une base (22),
l'outil de coupe (12) comprenant un coin taillant (14) doté d'une arête de coupe (30) et d'une face de coupe (32) se raccordant à l'arête de coupe (30),
**caractérisé en ce que**,
lors du déplacement du coin taillant (14) devant la base (22), une bissectrice passant par l'arête de coupe (30) est inclinée par rapport à la surface de la base (22) d'un angle α tel que 45° ≤ α ≤ 90° et
l'avance du dispositif d'avance (16) et la géométrie de l'outil de coupe (12) sont adaptés l'un à l'autre de telle sorte que l'élastomère (20), une fois que le coin taillant (14) est venu en contact avec l'élastomère (20), est tout d'abord seulement au moins partiellement comprimé entre la face de coupe (32) et la base (22) par la face de coupe (32) avant que l'arête de coupe (30) ne coupe à travers l'élastomère (20) par coupe par coin, l'élastomère (20) étant, dans un état basculé élastiquement vers le haut à partir de la base (22), capturé par la face de coupe (32) au niveau du côté arrière plat du coin taillant (14) et étant ensuite pressé contre la base (22) et étant, dans une position dans laquelle l'élastomère (20) ne peut sensiblement plus s'échapper élastiquement, coupé par un roulement de l'arête de coupe (30) sur l'élastomère (20) partiellement comprimé et par un déplacement du coin taillant (14) à travers l'élastomère à la manière d'un coin.
